# EUROPEAN PATENT SPECIFICATION

(11) **EP 2 685 113 B1**
(45) Date of publication and mention of the grant of the patent: **10.04.2019**
(21) Application number: 12176165.4
(22) Date of filing: 12.07.2012
(51) Int. Cl.: F16B 41/00, F16B 37/00, F16B 37/08, B60R 21/213

(54) **Attachment assembly**
Befestigungsanordnung
Ensemble de fixation

(43) Date of publication of application: 15.01.2014
(73) Proprietor: Volvo Car Corporation, 405 31 Göteborg (SE)
(72) Inventor: Svensson, Birger, 429 32 Kullavik (SE); Zengin, Fatma, 463 31 Lilla Edet (SE)
(74) Representative: Valea AB

(56) References cited:
- EP-A1- 2 682 615
- DE-A1-102010 027 204
- DE-U1-202006 001 894
- DE-U1-202006 013 530
- US-A- 2 907 418
- US-B2- 6 851 710

## Description

### TECHNICAL FIELD

The present disclosure relates to an attachment assembly for attaching a second object to a first object, the attachment assembly comprising a fastening member and a washer. The attachment assembly further comprises a bushing. The disclosure further relates to a use of the attachment assembly for attaching an inflatable curtain to a vehicle, to a cantrail and to a vehicle, as well as a method for attaching a second object to a first object.

### BACKGROUND

Attaching a second object to a first object may sometimes be difficult for one person, since there is a desire to simultaneously hold the second object at a suitable position for fastening, to hold a fastening member, such as a screw, and to hold a tool used for attaching the fastening member, such as a screw-driver. The difficulties are increased if the second object is large and/or heavy. It is also more difficult if there is limited space available for the person doing the work and/or the person cannot see the position of the attachment.

A typical situation may be when attaching an object, such as a panel, to a wall or a ceiling of a building, e.g. during construction. Another typical situation is during assembly of a vehicle when attaching an automotive part to the vehicle, e.g. when attaching an inflatable curtain to a cantrail, i.e. the portion of a vehicle body extending between the A, B and/or C pillars at the upper part of the vehicle. The inflatable curtain is an airbag, which is adapted to cover the upper part of a vehicle's side in case of a side impact collision, thereby cushioning the heads of the passengers seated at that side. Since the inflatable curtain is part of a passenger protection system, it is desired that the fastening member is secured by a predetermined torque.

Such attachment work may more easily be done by two persons, e.g. one person holding the second object in position and the other fastening it by means of the fastening member using the tool.

Prior art solutions making it possible for one person to attach one object to another include using a temporary fixation of the second object to the first object, e.g. by means of a clamp to the first object or by a stand standing on e.g. the floor and pressing the second object towards the first object. Time is then spent to arrange the temporary fixation and to remove it afterwards.

Document US 6,851,710 B2 discloses using a clip, which is pushed into a corresponding opening of the vehicle surface thereby attaching an inflatable curtain to a vehicle. One embodiment discloses that a clip is used in combination with a rigid mechanical fastener, illustrated as a bolt.

In some situations, a clip does not provide enough mechanical strength of the final attachment. In the solution of US 6,851,710 B2 comprising the combined use of the clip and the rigid mechanical fastener, two different attachment steps are carried out by the operator, which takes some extra time.

There is thus a desire for an improved attachment system, in particular for attaching an inflatable curtain to a vehicle, which is suitable for being handled by one person.

Document DE 20 2006 013530 U1 relates to an attachment assembly for attaching a second object to a first object. The attachment assembly comprises a bolt and a securing-retaining disc.

Document DE 10 2010 027204 A1 relates to a nut for fastening a first workpiece defining a through recess to a second workpiece including a bolt projecting in an axial direction through the recess. The nut comprises an axially extending shank and flange at a first end of the shank. The nut defines a bore extending axially through the flange and into the shank and further defines an opening to the bore proximate to the first end of the shank. The nut further includes an elastic holding section radially outward of the opening. The nut partially defines a depression radially outward of the holding section, so that the holding section can flex radially outward into the depression when the nut is jammed onto the bolt.

Document DE 20 2006 001894 U1 relates to a fastening element for vehicle parts, in particular for fastening a heat shield to a bolt shaped fastening means of a vehicle body, preferably an underbody of a motor vehicle. The fastening element comprises a claw disk and a spring washer, held at claws of the claw disk. The claw disk comprises an opening and the spring washer can be interlocked with a bolt shaped fastening means. The claw disk comprises at least one clip element, associated with the opening and oriented away from the spring washer. The at least one clip element is configured for insertion through an opening in the vehicle part or in the heat shield. The at least one clip element comprises an undercut for interlocking the rim portion of the opening of the vehicle part or of the heat shield.

Document EP 2 682 615 A1, representing prior art under Article 54(3)EPC, relates to a nut, in particular a weld nut, pierce nut, or rivet nut, comprising a head part and a shaft part formed on the head part. A through-hole passes through the head part and the shaft part. The through-hole has an enlarged diameter in the area of the head part at least in some areas, whereby a receptacle is formed, into which a retaining element is introduced in order to captively fix a screw end.

### SUMMARY

The object of the present disclosure is to overcome or ameliorate at least one of the disadvantages of the prior art, or to provide a useful alternative.

It is desirable to provide an attachment assembly, which offers a less complicated and easier to use attachment than the prior art.

It is further desirable that one person can handle the attachment alone.

An object above may be achieved by the subject-matter of claim 1.

Thus, in a first aspect of the present invention there is provided an attachment assembly for attaching a second object to a first object according to claim 1. The attachment assembly comprises
- a fastening member adapted to be attached to the first object,
- a washer comprising an opening for receiving the fastening member,
wherein the washer is adapted to be fixedly attached to the first object, and the washer comprises a resilient member located at the opening, which resilient member is displaceable between a first position, wherein the resilient member retains the fastening member, and a second position allowing passage of the fastening member through the opening of the washer.

The first object may be a wall or a ceiling of a building. Alternatively, the first object may a body of a vehicle, e.g. a cantrail or an A, B or C pillar.

The second object is typically large and/or heavy, such that it is difficult to handle for one person. If in a building, the second object may be a panel, e.g. a wall or ceiling panel. If in a vehicle, the second object may be a panel or an inflatable curtain.

The fastening member is a screw having a thread. The screw is intended to be screwed into the first object to thereby attach the second object to the first object. As used herein, a screw is an externally threaded fastener capable of being inserted into holes in assembled parts, or mating with a preformed internal thread or forming its own thread, and of being tightened or released by torqueing a head of the screw.

The washer may be welded or glued to the first object or fixated to it in some other way known by the skilled person. The expression washer as used herein is intended to mean a flat, thin ring or plate of any shape.

The fastening member, i.e. the screw, and the washer are manufactured separately from each other. They may also be sold and/or used as separate units, being prepared for later attachment to each other. Purely as an example, the washer may be delivered as a part of the first object, e.g. a cantrail being sent to an assembly plant for vehicles, wherein another automotive part, such as an inflatable curtain, is attached to the cantrail. The fastening member, e.g. the screw, may be delivered as a separate unit or may be comprised in the automotive part.

Preferably the second object is provided with a hole, having a large enough diameter for the shaft of the screw to pass. However, the head of the screw has a larger diameter than the shaft, such that the screw is able to retain the second object in place. Alternatively, or as a complement, a washer may be used adjacent to the head of the screw for retaining the second object.

One, two, three or more resilient members may be used in the attachment assembly.

In an embodiment, the fastening member is a screw and the resilient member is arranged in the opening of the washer such that, by applying an axial force to the screw, the resilient member is displaced from the first position to the second position by the screw, thereby allowing the screw to be pushed through the opening by means of the applied force, and when no such force is applied, the resilient member assumes the first position, thereby retaining the screw.

The screw is thus passed through the opening of the washer by being pushed. Preferably the resiliency of the resilient member is selected such that hand force is enough. The screw may pass through the opening also if the force deviates from axial, as long as it has a component in the axial direction of the attachment assembly.

The resilient member may be arranged to define an inner diameter of the opening of the washer. In the first position of the resilient member, the inner diameter of the opening is less than an outer thread diameter of the screw and larger than an inner thread diameter of the screw. In the second position of the resilient member, the inner diameter of the opening is larger than the outer thread diameter of the screw. Thereby the resilient member is adapted to grip into a groove of the thread of the screw while retaining the screw, the resilient member then being in the first position. In the second position, the resilient member is displaced out of the way of the thread of the screw, such that the screw may be easily pushed through the opening of the washer.

The resilient member comprises at least one flap protruding into the opening of the washer, the flap being in the plane of the washer, when in the first position of the resilient member, and a portion of the flap being displaced to a position out of the plane of the washer, when in the second position of the resilient member. The flap may be moved from the first to the second position by the screw being pushed through the opening of the washer.

The attachment assembly further comprises a bushing, which is fixedly attachable to the first object, the washer being fixedly attachable via the bushing to the first object. Purely as an example, the bushing may be welded or glued to the first object, e.g. a cantrail. The cantrail may in such a case be delivered comprising the bushing and the washer to an assembly plant for vehicles.

The bushing comprises a receptacle for receiving the screw. The receptacle of the bushing may be a through-going axial bore. The receptacle may also be a hole in the bushing.

The receptacle may comprise a portion forming a seat for the washer. This portion may have a larger diameter than the main portion of the receptacle, since the diameter of the main portion is adapted to provide a good attachment for the screw.

In an embodiment the screw is a thread-cutting screw. It may then cut its own thread in the receptacle. The thread-cutting screw provides a higher friction than a corresponding non-thread-cutting screw, thereby increasing the mechanical strength of the attachment. It is thus possible to use a screw of smaller dimensions, e.g. by going down one step in the ISO metric M series of screw dimensions. In addition, using a thread-cutting screw reduces the risk that the attachment assembly is destroyed due to improper alignment of the threads of the screw and the receptacle, respectively. There will thus be a higher tolerance for tightening the screw with a slightly oblique angle.

If using a bushing comprising a receptacle and a thread-cutting screw, the inner diameter of the receptacle is preferably less than the outer thread diameter of the screw, such that the screw will cut into the inner wall of the receptacle. If the receptacle comprises portions having different diameters, e.g. due to that there is a seat for the washer, it is the main portion of the receptacle, which has the inner diameter of the receptacle being less than the outer thread diameter of the screw.

A suitable material for the screw is steel. A suitable material for the washer is plastic. A suitable material for the bushing is steel. If the screw is thread-cutting, the material characteristics of the bushing are selected such that the screw is able to cut threads in the bushing.

In a second aspect of the present invention there is provided a use of an attachment assembly as described above for attaching an automotive part to a vehicle, wherein the first object is a body of the vehicle, e.g. a cantrail, and the second object is an automotive part, e.g. an inflatable curtain.

In a third aspect of the present invention there is provided a cantrail for a vehicle according to claim 9, the cantrail comprising the washer of the above-mentioned attachment assembly and the above-mentioned bushing.

In a fourth aspect of the present invention there is provided a vehicle according to claim 10, the vehicle comprising the above-mentioned attachment assembly and an inflatable curtain being attached to a body of the vehicle by the attachment assembly.

In a fifth aspect of the present invention there is provided a method for attaching a second object to a first object by means of an attachment assembly according to claim 11. The attachment assembly comprises a fastening member adapted to be attached to the first object, and a washer comprising an opening for receiving the fastening member. The washer is fixedly attached to the first object, and comprises a resilient member located at the opening, which resilient member is displaceable between a first position, wherein the resilient member retains the fastening member, and a second position allowing passage of the fastening member through the opening. The method comprises the steps of:
- placing the second object adjacent to the first object in a predetermined position allowing the fastening member to be pushed through the washer,
- applying an axial force to the fastening member thereby pushing it through the opening of the washer thereby displacing the resilient member to the second position,
- letting the washer retain the fastening member by means of the resilient member being in the first position,
- fastening the fastening member into the first object, thereby attaching the second object to the first object.

In an embodiment of the method, the first object is a body of a vehicle, e.g. a cantrail, the second object is an automotive part, such as an inflatable curtain, and the fastening member is a screw. The fastening is then carried out by screwing.

### BRIEF DESCRIPTION OF THE DRAWINGS

The present invention will hereinafter be further explained by means of non-limiting examples with reference to the appended drawings wherein:
- Fig. 1: is a schematic side view of a portion of a vehicle comprising an inflatable curtain,
- Fig. 2: illustrates an inflatable curtain for use in a vehicle in a storage state,
- Fig. 3: is a schematic cross-sectional view of an attachment assembly according to the invention,
- Fig. 4: illustrates two parts of the attachment assembly of Fig. 3,
- Fig. 5: is a bottom view of the two parts of Fig. 4.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

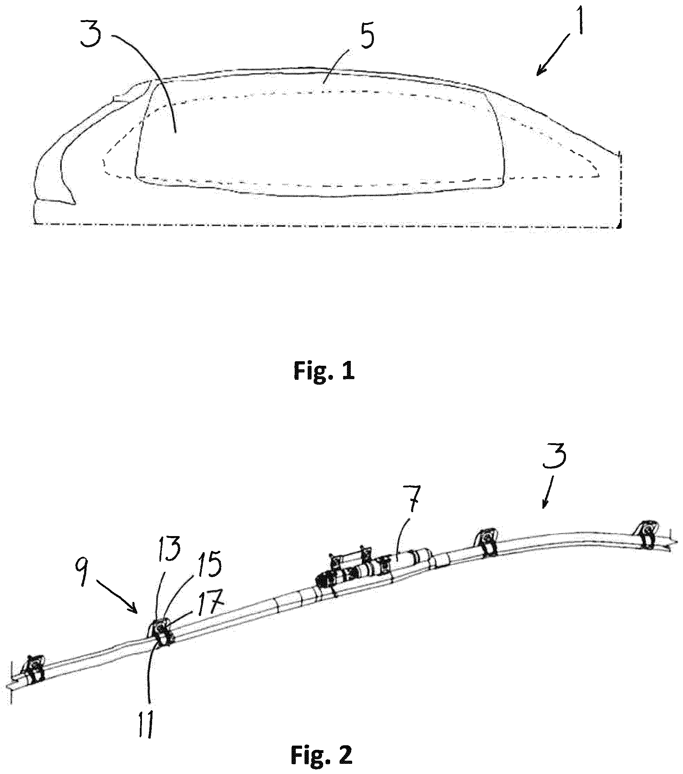

Figure 1 schematically illustrates a side view of a portion of a vehicle 1 comprising an inflatable curtain 3. The inflatable curtain 3 is shown in its deployed state, wherein it is ready to protect a passenger at a side impact on the vehicle 1. The inflatable curtain 3 is attached to a body of the vehicle 1, e.g. to a cantrail 5.

Normally the inflatable curtain is in a storage state, see Figure 2, wherein it is folded and or rolled to a tubular shape. An inflator 7 is connected to the inflatable curtain. The inflator 7 may be activated by crash sensors, in case a collision occurs, thereby inflating the inflatable curtain 3, such that it assumes the deployed state as illustrated by Figure 1.

The inflatable curtain 3 is attached to the cantrail 5 by means of brackets 9. The bracket 9 is used to retain the inflatable curtain 3 to the cantrail 5. In the illustrated embodiment, a portion 11 of the bracket 9 at least partly encircles the tubular shape of the inflatable curtain 3. The encircling portion 11 may be resilient and comprise a slot (not illustrated). When the encircling portion 11 is to be connected to the inflatable curtain 3, the slot is widened such that the inflatable curtain 3 can be entered through the slot and then the encircling portion 11 springs back to a retaining position, as the one illustrated in Figure 2. Alternatively, the bracket may be clipped to or around the inflatable curtain 3, or the bracket may be glued or welded to the inflatable curtain 3.

The bracket 9 comprises a hole 13 suitable for a screw 15. The hole 13 has a diameter, which is large enough for the screw 15 to go through, but which is small enough for a head 17 of the screw 15 to be stopped, such that the head 17 will be able to retain the inflatable curtain 3, once the screw 15 has been attached to the body of the vehicle, e.g. the cantrail 5. The head 17 has a larger diameter than the rest of the screw 11. Optionally a washer may be used to further increase the diameter of the head.

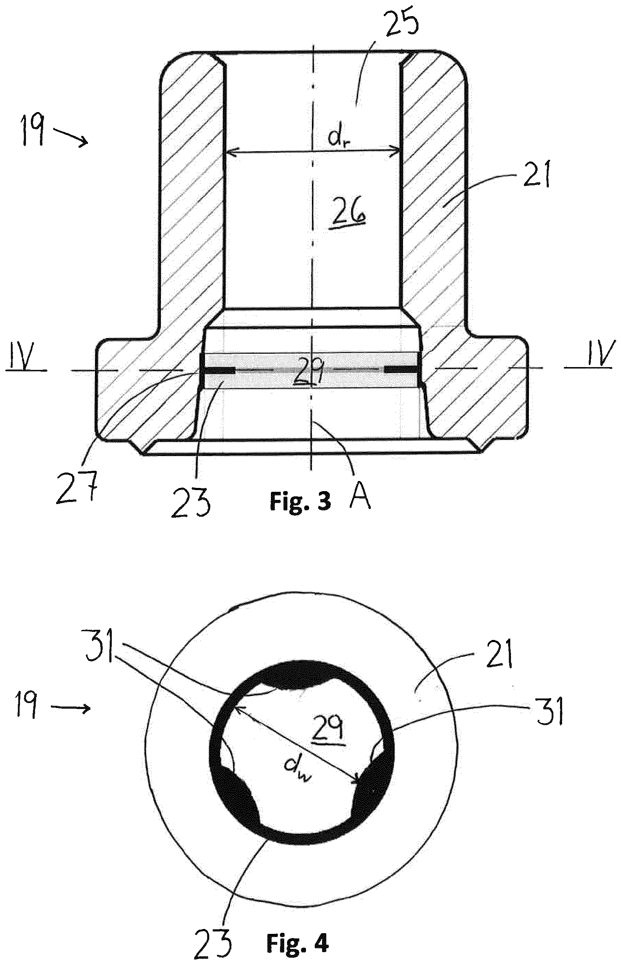

Figures 3-5 illustrate an attachment assembly 19 according to a first embodiment of the invention. The attachment assembly 19 of the first embodiment comprises a bushing 21, a washer 23 and the screw 15. The attachment assembly 19 has an axial direction, denoted by A in the Figures 3-5. Figure 3 and 4 illustrate the bushing 21 and the washer 23 without the screw 15 being inserted. The attachment assembly 19 may be used for attaching the inflatable curtain 3 to the cantrail 5, see Figures 1 and 2. In that case, the bushing 21 is preferably embedded in the cantrail 5, such that the bushing 21, and thereby the washer 23, is fixedly attached to the cantrail 5. The bushing 21 may for example be welded to the cantrail 5.

The bushing 21 comprises a receptacle for the screw 15 in the form of a through-going axial bore 25 comprising a main portion 26 having a diameter dᵣ. The receptacle further comprises a portion forming a seat 27 for the washer 23. The diameter of the seat 27 is about as large as the outer diameter of the washer 23. The washer 23 may be placed into its desired position in the seat 27 by e.g. being pressed into the seat 27.

Figure 4 shows a cross-section through the bushing 21 and the washer 23 of Figure 3 along the line IV-IV. The washer 23 has a central opening 29 for receiving the screw 15. The washer further comprises resilient members, illustrated as three flaps 31, the function of which will be explained below. Although three resilient members 31 are shown in Figure 4, one, two, four, five or more resilient members may be used. Alternatively, a rim at least partially enclosing the diameter of the opening 29 and provided with one or more slits or slots may be used.

The resilient members 31 are used to define an inner diameter d_{w} of the opening 29. The inner diameter d_{w} of the opening 29 is defined as the distance along a line going from the innermost portion of a resilient member 31 through the centre of the opening 29 to the rim of the opening 29 opposite to the innermost portion of the resilient member 31. In Figures 3 and 4, the inner diameter d_{w} of the opening 29 approximately coincides with the diameter dᵣ of the main portion 26 of the through-going axial bore 25. Even if this provides an appropriate size of the inner diameter d_{w}, it is also possible that the two diameters, dᵣ of the receptacle and d_{w} of the inner diameter of the washer 23, differ from each other. Figure 4 illustrates the resilient members 31 being in a first position. No force is applied to them.

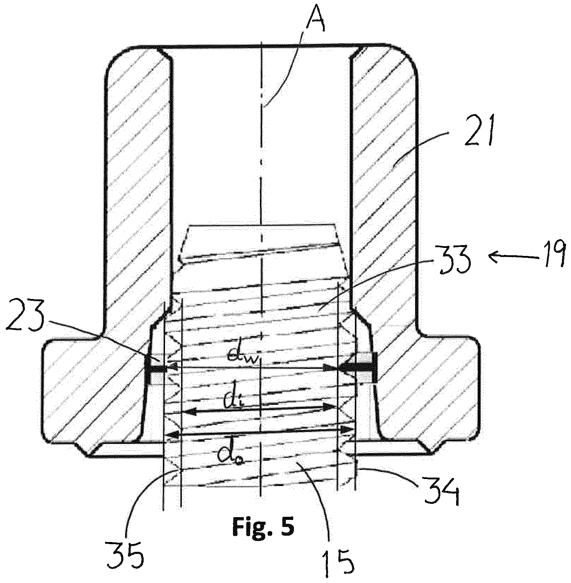

In Figure 5 a portion of the screw 15 is shown in greater detail. The screw 15 is provided with a thread 33. The screw 15 has an outer diameter dₒ defined by the ridges 34 of the thread 33 and an inner diameter dᵢ defined by the grooves 35 of the thread 33. By definition the inner diameter is less than the outer diameter, dᵢ < dₒ.

Preferably, the screw 15 is thread-cutting, such that it can cut its way through the main portion 26 of the bushing 21, as is the case for the first embodiment. Alternatively, the bushing 21 could be provided with a thread as well, which matches that of the screw 15.

Figure 5 illustrates the situation after the screw 15 has been pushed through the washer 23 by an axial force. The screw 15 will enter also if the force deviates from axial, as long as it has a component in the axial direction. The axial force used to push the screw 15 through the opening 29 of the washer 23 is not especially high; to push the screw 15 by hand force is for example sufficient. As the screw 15 is being pushed inwards through the opening 29, the resilient members 31 are bent out of the plane of the washer 23 by the thread 33 of the screw 15. The resilient members 31 are thus displaced from the first position shown in Figures 3-4 to a second position allowing the screw 15 to pass through the opening 29, which temporarily has a larger diameter, since the resilient members 31 are bent inwards in the direction of the axial force.

When the pushing movement ceases, i.e. the axial force is not applied any more, the resilient members 31 will return to the first position. The resilient members 31 will then partly penetrate into a groove 35 of the thread 33, as seen in Figure 5, such that the resilient member 31 retains the screw 15. The screw 15 will hence not move outwards again by itself, since it is retained by the resilient members 31. The resiliency of the resilient members 31 is adapted such that when the screw 15 is used to hold an object, for example an inflatable curtain 3, the resilient members 31 are strong enough to retain the screw 15 including the weight of the inflatable curtain 3. However, it is yet possible to pull out the screw 15 again if applying a force above a predetermined level, e.g. if the inflatable curtain 3 is going to be exchanged. This predetermined level is selected to be high enough to ensure that under normal conditions the resilient members 31 are strong enough to retain the screw 15 including the weight of the inflatable curtain 3.

The screw 15 may be pushed until it reaches the main portion 26 of the through-going axial bore 25, which has a smaller diameter dᵣ than the outer diameter dₒ of the screw 15. In order to move the screw 15 further inwards into the bore 25, it will be screwed.

The resilient members 31 will be able to retain the screw 15 as soon as the resilient members 31 are able to grip into a groove 35 of the thread 33. Hence the screw 15 needs not to be pushed as far as in Figure 5. However, it is advantageous to push the screw 15 as far as possible before screwing starts.

Since the object to be attached, in the example the inflatable curtain 3, is held in position at the object whereto it is to be attached, in this example the cantrail 5, by the screw 15 being retained by the washer 23, the person making the attachment will have both hands free to attach the screw 15 by screwing. The screw 15 is preferably attached by a predefined torque which is selected to fulfil security standards.

The above-described attachment assembly 19 may be handled also for the case when the person making the attachment cannot see the screw 15.

Dependent on the characteristics of the object, to which the other object is to be attached, the bushing may be dispensed with. In that case, the washer is fixedly attached directly to the object to be attached to.

The method used to attach the screw 15 of the attachment assembly described above comprises the steps of:
- placing the bracket 9 attached to the inflatable curtain 3 adjacent to the cantrail 5 in a position allowing the screw 15 to be pushed through the washer 23 of the bushing 21 in the cantrail 5,
- applying an axial force to the screw 15 thereby pushing it through the washer 23,
- pushing the screw 15 far enough, such that the resilient members 31 of the washer 23 can retain the screw 15, the inflatable curtain 3 hence being retained in position by the screw 15,
- screwing the screw 15 into the bushing 21, preferably with a predetermined torque.

When the screw 15 is pushed through the washer 23, it moves in the axial direction A. Even if it would be possible to combine the axial pushing of the screw 15 with a rotational movement, it is enough with only axial movement during the pushing. However, when the screw 15 is tightened to the first object, e.g. the cantrail 5, by screwing, the screw 15 performs a movement, which comprises rotational and axial movement. The combination of rotation and axial movement during screwing is influenced by the thread of the screw 15.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. An attachment assembly (19) for attaching a second object (3) to a first object (5), said attachment assembly (19) comprising
- a fastening member (15) adapted to be attached to said first object (5),
- a washer (23) comprising an opening (29) for receiving said fastening member (15),
wherein said washer (23) is adapted to be fixedly attached to said first object (5) before attaching said second object by said fastening member (15), and
said washer (23) comprises a resilient member (31) located at said opening (29), which resilient member (31) is displaceable between a first position, wherein said resilient member (31) retains said fastening member (15), and a second position allowing passage of said fastening member (15) through said opening (29) of said washer (23),
said attachment assembly (19) further comprises a bushing (21), which is fixedly attachable to said first object (5), said washer (23) being fixedly attachable via said bushing (21) to said first object (5),
said fastening member is a screw (15),
said bushing (21) comprises a receptacle (25) for receiving said screw (15), and a main portion of said receptacle (25) has a diameter adapted to provide a good attachment for said screw (15),
wherein said resilient member comprises at least one flap (31) protruding into said opening (29), said flap (31) being in the plane of said washer (23), when in said first position of said resilient member (31), and a portion of said flap (31) being displaced to a position out of the plane of said washer (23), when in said second position of said resilient member (31).

2. The attachment assembly (19) according to claim 1, said resilient member (31) being arranged in said opening (29) of said washer (23) such that, by applying an axial force to said screw (15), said resilient member (31) is displaced from said first position to said second position by said screw (15), thereby allowing said screw (15) to be pushed through said opening (29) by means of said applied force, and when no such force is applied, said resilient member (31) assumes said first position, thereby retaining said screw (15).

3. The attachment assembly (19) according to claim 2, wherein said resilient member (31) defines an inner diameter (d_{w}) of said opening (29) of said washer (23), such that in said first position of said resilient member (31), the inner diameter (d_{w}) of said opening (29) is less than an outer thread diameter (dₒ) of said screw (15) and larger than an inner thread diameter (dᵢ) of said screw (15), and
in said second position of said resilient member (31), the inner diameter (d_{w}) of said opening (29) is larger than the outer thread diameter (dₒ) of said screw (15).

4. The attachment assembly (19) according to any one of the previous claims, wherein said receptacle of said bushing (21) is a through-going axial bore (25).

5. The attachment assembly (19) according to any one of the previous claims, wherein said receptacle comprises a portion forming a seat (27) for said washer (23).

6. The attachment assembly (19) according to any one of claims 2-5, wherein said screw is a thread-cutting screw (15).

7. The attachment assembly (19) according to claim 6, wherein an inner diameter (dᵣ) of said receptacle (25) is less than the outer thread diameter (dₒ) of said screw (15).

8. A use of an attachment assembly (19) according to any one of the previous claims for attaching an automotive part to a vehicle (1), wherein said first object is a body of said vehicle (1), e.g. a cantrail (5), and said second object is an automotive part, e.g. an inflatable curtain (3).

9. A cantrail (5) for a vehicle (1), said cantrail (5) comprising the washer (23) of the attachment assembly (19) according to any one of claims 1-7, said washer (23) being fixedly attached to said cantrail (5), and also a bushing (21), according to any one of claims 1-7, said bushing (21) being fixedly attached to said cantrail (5), said washer (23) in that case being fixedly attachable via said bushing (21) to said cantrail (5).

10. A vehicle (1) comprising an attachment assembly (19) according to any one of claims 1-7 and an inflatable curtain (3) being attached to a body of said vehicle (1) by said attachment assembly (19).

11. A method for attaching a second object (3) to a first object (5) by means of an attachment assembly (19) comprising a fastening member (15) adapted to be attached to said first object (5), and a washer (23) comprising an opening (29) for receiving said fastening member (15), said fastening member being a screw (15), said washer (23) being fixedly attached to said first object (5), said washer (23) comprising a resilient member (31) located at the opening (29) of said washer (23), which resilient member (31) is displaceable between a first position, wherein said resilient member (31) retains said fastening member (15), and a second position allowing passage of said fastening member (15) through said opening (29),
said attachment assembly (19) further comprising a bushing (21), which is fixedly attached to said first object (5), said washer (23) being fixedly attached via said bushing (21) to said first object (5),
said bushing (21) comprises a receptacle (25) for receiving said screw (15), and a main portion of said receptacle (25) having a diameter adapted to provide a good attachment for said screw (15),
wherein said resilient member comprises at least one flap (31) protruding into said opening (29), said flap (31) being in the plane of said washer (23), when in said first position of said resilient member (31), and a portion of said flap (31) being displaced to a position out of the plane of said washer (23), when in said second position of said resilient member (31),
said method comprising the steps of:
- placing said second object (3) adjacent to said first object (5) in a predetermined position allowing said fastening member (15) to be pushed through said washer (23),
- applying an axial force to said fastening member (15) thereby pushing it through said opening (29) of said washer (23) thereby displacing said resilient member (31) to said second position,
- letting said washer (23) retain said fastening member (15) by means of said resilient member (31) being in said first position,
- fastening said fastening member (15) into said first object (5) by screwing said fastening member (15) into said bushing (21), thereby attaching said second object (3) to said first object (5).

12. The method according to claim 11, wherein said first object (5) is a body of a vehicle (1) and said second object (3) is an inflatable curtain.

## Patentansprüche

1. Anbringungsanordnung (19) zum Anbringen eines zweiten Gegenstands (3) an einem ersten Gegenstand (5), wobei die Anbringungsanordnung (19) Folgendes umfasst:
- ein Befestigungselement (15), das geeignet ist, an dem ersten Gegenstand (5) angebracht zu werden,
- eine Unterlegscheibe (23), die eine Öffnung (29) zum Aufnehmen des Befestigungselements (15) umfasst,
wobei die Unterlegscheibe (23) geeignet ist, fest an dem ersten Gegenstand (5) angebracht zu werden, bevor der zweite Gegenstand durch das Befestigungselement (15) angebracht wird, und
wobei die Unterlegscheibe (23) ein elastisches Element (31) umfasst, das sich an der Öffnung (29) befindet, wobei das elastische Element (31) zwischen einer ersten Position, in der das elastische Element (31) das Befestigungselement (15) hält, und einer zweiten Position, in der ein Durchführen des Befestigungselements (15) durch die Öffnung (29) der Unterlegscheibe (23) ermöglicht ist, verlagerbar ist,
wobei die Anbringungsanordnung (19) ferner eine Muffe (21) umfasst, die fest an dem ersten Gegenstand (5) anbringbar ist, wobei die Unterlegscheibe (23) über die Muffe (21) fest an dem ersten Gegenstand (5) anbringbar ist,
wobei das Befestigungselement eine Schraube (15) ist,
wobei die Muffe (21) eine Aufnahme (25) zum Aufnehmen der Schraube (15) umfasst und ein Hauptabschnitt der Aufnahme (25) einen Durchmesser aufweist, der geeignet ist, eine gute Anbringung für die Schraube (15) bereitzustellen,
wobei das elastische Element wenigstens eine Lasche (31) umfasst, die in die Öffnung (29) vorsteht, wobei sich die Lasche (31) in der ersten Position des elastischen Elements (31) in der Ebene der Unterlegscheibe (23) befindet und ein Abschnitt der Lasche (31) in der zweiten Position des elastischen Elements (31) in eine Position außerhalb der Ebene der Unterlegscheibe (23) verlagert wird.

2. Anbringungsanordnung (19) nach Anspruch 1, wobei das elastische Element (31) auf eine solche Weise in der Öffnung (29) der Unterlegscheibe (23) angeordnet ist, dass durch Ausüben einer axialen Kraft auf die Schraube (15) das elastische Element (31) durch die Schraube (15) aus der ersten Position in die zweite Position verlagert wird, wodurch ermöglicht wird, dass die Schraube (15) mittels der ausgeübten Kraft durch die Öffnung (29) geschoben wird, und wenn keine derartige Kraft ausgeübt wird, das elastische Element (31) die erste Position einnimmt und dadurch die Schraube (15) hält.

3. Anbringungsanordnung (19) nach Anspruch 2, wobei das elastische Element (31) einen Innendurchmesser (d_{w}) der Öffnung (29) der Unterlegscheibe (23) festlegt, und zwar auf eine solche Weise, dass der Innendurchmesser (d_{w}) der Öffnung (29) in der ersten Position des elastischen Elements (31) kleiner als ein Gewindeaußendurchmesser (dₒ) der Schraube (15) und größer als ein Gewindeinnendurchmesser (dᵢ) der Schraube (15) ist und der Innendurchmesser (d_{w}) der Öffnung (29) in der zweiten Position des elastischen Elements (31) größer als der Gewindeaußendurchmesser (dₒ) der Schraube (15) ist.

4. Anbringungsanordnung (19) nach einem der vorhergehenden Ansprüche, wobei die Aufnahme der Muffe (21) eine durchgehende axiale Bohrung (25) ist.

5. Anbringungsanordnung (19) nach einem der vorhergehenden Ansprüche, wobei die Aufnahme einen Teil umfasst, der einen Sitz (27) für die Unterlegscheibe (23) bildet.

6. Anbringungsanordnung (19) nach einem der Ansprüche 2 bis 5, wobei die Schraube eine Gewindeschneidschraube (15) ist.

7. Anbringungsanordnung (19) nach Anspruch 6, wobei ein Innendurchmesser (dᵣ) der Aufnahme (25) kleiner als der Gewindeaußendurchmesser (dₒ) der Schraube (15) ist.

8. Verwendung einer Anbringungsanordnung (19) nach einem der vorhergehenden Ansprüche zum Anbringen eines Automobilteils an einem Fahrzeug (1), wobei der erste Gegenstand ein Aufbau des Fahrzeugs (1), z.B. ein seitlicher Dachrahmen (5), ist und der zweite Gegenstand ein Automobilteil, z.B. ein aufblasbarer Vorhang (3), ist.

9. Seitlicher Dachrahmen (5) für ein Fahrzeug (1), wobei der seitliche Dachrahmen (5) die Unterlegscheibe (23) der Anbringungsanordnung (19) nach einem der Ansprüche 1 bis 7 umfasst, wobei die Unterlegscheibe (23) fest an dem seitlichen Dachrahmen (5) angebracht ist, und außerdem eine Muffe (21) nach einem der Ansprüche 1 bis 7 umfasst, wobei die Muffe (21) fest an dem seitlichen Dachrahmen (5) angebracht ist, wobei die Unterlegscheibe (23) in diesem Fall über die Muffe (21) fest an dem seitlichen Dachrahmen (5) anbringbar ist.

10. Fahrzeug (1), umfassend eine Anbringungsanordnung (19) nach einem der Ansprüche 1 bis 7 und einen aufblasbaren Vorhang (3), der mittels der Anbringungsanordnung (19) an einem Aufbau des Fahrzeugs (1) angebracht ist.

11. Verfahren zum Anbringen eines zweiten Gegenstands (3) an einem ersten Gegenstand (5) mittels einer Anbringungsanordnung (19), die ein Befestigungselement (15), das geeignet ist, an dem ersten Gegenstand (5) angebracht zu werden, und eine Unterlegscheibe (23) umfasst, die eine Öffnung (29) zum Aufnehmen des Befestigungselements (15) umfasst, wobei das Befestigungselement eine Schraube (15) ist, wobei die Unterlegscheibe (23) fest an dem ersten Gegenstand (5) angebracht ist, wobei die Unterlegscheibe (23) ein elastisches Element (31) umfasst, das sich an der Öffnung (29) der Unterlegscheibe (23) befindet, wobei das elastische Element (31) zwischen einer ersten Position, in der das elastische Element (31) das Befestigungselement (15) hält, und einer zweiten Position, in der ein Durchführen des Befestigungselements (15) durch die Öffnung (29) ermöglicht ist, verlagerbar ist,
wobei die Anbringungsanordnung (19) ferner eine Muffe (21) umfasst, die fest an dem ersten Gegenstand (5) angebracht ist, wobei die Unterlegscheibe (23) über die Muffe (21) fest an dem ersten Gegenstand (5) angebracht ist,
wobei die Muffe (21) eine Aufnahme (25) zum Aufnehmen der Schraube (15) umfasst und ein Hauptabschnitt der Aufnahme (25) einen Durchmesser aufweist, der geeignet ist, eine gute Anbringung für die Schraube (15) bereitzustellen,
wobei das elastische Element wenigstens eine Lasche (31) umfasst, die in die Öffnung (29) vorsteht, wobei sich die Lasche (31) in der ersten Position des elastischen Elements (31) in der Ebene der Unterlegscheibe (23) befindet und ein Abschnitt der Lasche (31) in der zweiten Position des elastischen Elements (31) in eine Position außerhalb der Ebene der Unterlegscheibe (23) verlagert wird,
wobei das Verfahren die folgenden Schritte umfasst:
- Platzieren des zweiten Gegenstands (3) angrenzend an den ersten Gegenstand (5) in einer vorgegebenen Position, die es ermöglicht, dass das Befestigungselement (15) durch die Unterlegscheibe (23) geschoben wird,
- Ausüben einer axialen Kraft auf das Befestigungselement (15), wodurch dieses durch die Öffnung (29) der Unterlegscheibe (23) geschoben wird, wodurch das elastische Element (31) in die zweite Position verlagert wird,
- Ermöglichen, dass die Unterlegscheibe (23) das Befestigungselement (15) dadurch hält, dass sich das elastische Element (31) in der ersten Position befindet,
- Befestigen des Befestigungselements (15) in dem ersten Gegenstand (5) durch Einschrauben des Befestigungselements (15) in die Muffe (21), wodurch der zweite Gegenstand (3) an dem ersten Gegenstand (5) angebracht wird.

12. Verfahren nach Anspruch 11, wobei der erste Gegenstand (5) ein Aufbau eines Fahrzeugs (1) ist und der zweite Gegenstand (3) ein aufblasbarer Vorhang ist.

## Revendications

1. Ensemble de fixation (19) servant à fixer un deuxième objet (3) à un premier objet (5), ledit ensemble de fixation (19) comprenant
- un élément d'assujettissement (15) conçu pour être fixé audit premier objet (5),
- une rondelle (23) comprenant une ouverture (29) destinée à recevoir ledit élément d'assujettissement (15),
dans lequel ladite rondelle (23) est conçue pour être fixée à demeure audit premier objet (5) avant de fixer ledit deuxième objet au moyen dudit élément d'assujettissement (15), et
ladite rondelle (23) comprend un élément élastique (31) situé au niveau de ladite ouverture (29), lequel élément élastique (31) est déplaçable entre une première position, dans laquelle ledit élément élastique (31) retient ledit élément d'assujettissement (15), et une deuxième position permettant le passage dudit élément d'assujettissement (15) à travers ladite ouverture (29) de ladite rondelle (23),
ledit ensemble de fixation (19) comprend en outre une douille (21) qui peut être fixée à demeure audit premier objet (5), ladite rondelle (23) pouvant être fixée à demeure audit premier objet (5) par le biais de ladite douille (21),
ledit élément d'assujettissement est une vis (15), ladite douille (21) comprend un logement (25) destiné à recevoir ladite vis (15), et une partie principale dudit logement (25) a un diamètre conçu pour produire une bonne fixation pour ladite vis (15),
dans lequel ledit élément élastique comprend au moins un rabat (31) faisant saillie à l'intérieur de ladite ouverture (29), ledit rabat (31) étant dans le plan de ladite rondelle (23), dans ladite première position dudit élément élastique (31), et une partie dudit rabat (31) étant déplacée jusqu'à une position hors du plan de ladite rondelle (23), dans ladite deuxième position dudit élément élastique (31).

2. Ensemble de fixation (19) selon la revendication 1, ledit élément élastique (31) étant agencé dans ladite ouverture (29) de ladite rondelle (23) de telle sorte que, par application d'une force axiale à ladite vis (15), ledit élément élastique (31) est déplacé de ladite première position à ladite deuxième position par ladite vis (15), ce qui permet à ladite vis (15) d'être poussée à travers ladite ouverture (29) au moyen de ladite force appliquée, et lorsqu'aucune force n'est appliquée, ledit élément élastique (31) adoptant ladite première position, ce qui permet de retenir ladite vis (15).

3. Ensemble de fixation (19) selon la revendication 2, dans lequel ledit organe élastique (31) définit un diamètre intérieur (d_{w}) de ladite ouverture (29) de ladite rondelle (23), de telle sorte que, dans ladite première position dudit élément élastique (31), le diamètre intérieur (d_{w}) de ladite ouverture (29) est inférieur à un diamètre de filetage extérieur (dₒ) de ladite vis (15) et supérieur à un diamètre de filetage intérieur (dᵢ) de ladite vis (15), et
dans ladite deuxième position dudit élément élastique (31), le diamètre intérieur (d_{w}) de ladite ouverture (29) est supérieur au diamètre de filetage extérieur (dₒ) de ladite vis (15).

4. Ensemble de fixation (19) selon l'une quelconque des revendications précédentes, dans lequel ledit logement de ladite douille (21) est un alésage axial traversant (25).

5. Ensemble de fixation (19) selon l'une quelconque des revendications précédentes, dans lequel ledit logement comprend une partie formant un siège (27) pour ladite rondelle (23).

6. Ensemble de fixation (19) selon l'une quelconque des revendications 2 à 5, dans lequel ladite vis est une vis tranchante (15).

7. Ensemble de fixation (19) selon la revendication 6, dans lequel un diamètre intérieur (dᵣ) dudit logement (25) est inférieur au diamètre de filetage extérieur (dₒ) de ladite vis (15).

8. Utilisation d'un ensemble de fixation (19) selon l'une quelconque des revendications précédentes pour fixer une pièce pour véhicules automobiles à un véhicule (1), dans laquelle ledit premier objet est une carrosserie dudit véhicule (1), par exemple un renfort de toit (5), et ledit deuxième objet est une pièce pour véhicules automobiles, par exemple un rideau gonflable (3).

9. Renfort de toit (5) pour un véhicule (1), ledit renfort de toit (5) comprenant la rondelle (23) de l'ensemble de fixation (19) selon l'une quelconque des revendications 1 à 7, ladite rondelle (23) étant fixée à demeure audit renfort de toit (5), et aussi une douille (21) selon l'une quelconque des revendications 1 à 7, ladite douille (21) étant fixée à demeure audit renfort de toit (5), ladite rondelle (23) pouvant dans ce cas être fixée audit renfort de toit (5) par le biais de ladite douille (21).

10. Véhicule (1) comprenant un ensemble de fixation (19) selon l'une quelconque des revendications 1 à 7 et un rideau gonflable (3) fixé à une carrosserie dudit véhicule (1) par ledit ensemble de fixation (19).

11. Procédé de fixation d'un deuxième objet (3) à un premier objet (5) au moyen d'un ensemble de fixation (19) comprenant un élément d'assujettissement (15) conçu pour être fixé audit premier objet (5), et une rondelle (23) comprenant une ouverture (29) destinée à recevoir ledit élément d'assujettissement (15), ledit élément d'assujettissement étant une vis (15), ladite rondelle (23) étant fixée à demeure audit premier objet (5), ladite rondelle (23) comprenant un élément élastique (31) situé au niveau de l'ouverture (29) de ladite rondelle (23), lequel élément élastique (31) est déplaçable entre une première position, dans laquelle ledit élément élastique (31) retient ledit élément d'assujettissement (15), et une deuxième position permettant le passage dudit élément d'assujettissement (15) à travers ladite ouverture (29),
ledit ensemble de fixation (19) comprenant en outre une douille (21) qui est fixée à demeure audit premier objet (5), ladite rondelle (23) étant fixée à demeure audit premier objet (5) par le biais de ladite douille (21),
ladite douille (21) comprenant un logement (25) destiné à recevoir ladite vis (15), et une partie principale dudit logement (25) ayant un diamètre conçu pour produire une bonne fixation pour ladite vis (15),
dans lequel ledit élément élastique comprend au moins un rabat (31) faisant saillie à l'intérieur de ladite ouverture (29), ledit rabat (31) étant dans le plan de ladite rondelle (23), dans ladite première position dudit élément élastique (31), et une partie dudit rabat (31) étant déplacée jusqu'à une position hors du plan de ladite rondelle (23), dans ladite deuxième position dudit élément élastique (31),
ledit procédé comprenant les étapes consistant à :
- placer ledit deuxième objet (3) de manière adjacente audit premier objet (5) dans une position prédéterminée permettant audit élément d'assujettissement (15) d'être poussé à travers ladite rondelle (23),
- appliquer une force axiale audit élément d'assujettissement (15), ce qui permet de le pousser à travers ladite ouverture (29) de ladite rondelle (23) en déplaçant ainsi ledit élément élastique (31) jusqu'à ladite deuxième position,
- laisser ladite rondelle (23) retenir ledit élément d'assujettissement (15) au moyen dudit élément élastique (31) dans ladite première position,
- assujettir ledit élément d'assujettissement (15) à l'intérieur dudit premier objet (5) par vissage dudit élément d'assujettissement (15) à l'intérieur de ladite douille (21), ce qui permet de fixer ledit deuxième objet (3) audit premier objet (5).

12. Procédé selon la revendication 11, dans lequel ledit premier objet (5) est une carrosserie d'un véhicule (1) et ledit deuxième objet (3) est un rideau gonflable.
